Europäisches Patentamt

European Patent Office

Office européen des brevets

(11) Veröffentlichungsnummer: **0 318 626**

**A1**

(12) EUROPÄISCHE PATENTANMELDUNG

(21) Anmeldenummer: 87730159.8

(22) Anmeldetag: 01.12.87

(51) Int. Cl.⁴: **G11B 5/11**

(43) Veröffentlichungstag der Anmeldung:
07.06.89 Patentblatt 89/23

(84) Benannte Vertragsstaaten:
**AT BE CH DE ES FR GB IT LI NL**

(71) Anmelder: **MANNESMANN Aktiengesellschaft**
**Mannesmannufer 2**
**D-4000 Düsseldorf 1(DE)**

(72) Erfinder: **Nölke, Günther, Ing. (grad.)**
**Freiburger Strasse 22**
**D-7730 Villingen-Schwenningen(DE)**
Erfinder: **Ketterer, Gunter**
**Am Wald 9**
**D-7731 Unterkirnach(DE)**
Erfinder: **Dyma, Horst**
**Langes Gewann 26**
**D-7730 VS-Pfaffenweiler(DE)**

(74) Vertreter: **Meissner, Peter E., Dipl.-Ing. et al**
**Meissner & Meissner Patentanwälte**
**Herbertstrasse 22**
**D-1000 Berlin 33 Grunewald(DE)**

(54) **Einrichtung mit einem Lesekopf für magnetisch aufgezeichnete Informationen.**

(57) Eine Einrichtung mit einem Lesekopf (16) für magnetisch aufgezeichnete Informationen in elektronischen Datenverarbeitungseinrichtungen, insbesondere in Belegverarbeitungssystemen, unterliegt Störungen durch die Belegverarbeitungssysteme, in denen Baugruppen magnetische Störfelder im Bereich des Lesekopfes (16) verursachen.

Angesichts der Unvermeidbarkeit derartiger magnetischer Störfelder und um weitgehend ohne deren Abschirmung gegenüber einem magnetischen Lesekopf auszukommen und trotzdem ein ausreichend genaues Lesesignal (20) zu erzeugen, wird vorgeschlagen, daß ein Lesekopf (16) und ein Referenzkopf (17) mit jeweils gleichen mechanischen und elektrischen Werten in einem Lesesystem (33) zusammengefaßt und in einer Differenzschaltung (18) zusammengeschaltet sind und daß deren Differenzsignal aus dem zweifachen Störsignal (19) und dem Lesesignal (20) am Ausgang (21) der Differenzschaltung (18) einer Lese-Elektronik (23) zuführbar ist.

FIG. 4

## Einrichtung mit einem Lesekopf für magentisch aufgezeichnete Informationen

Die Erfindung betrifft eine Einrichtung mit einem Lesekopf für magnetisch aufgezeichnete Informationen in elektronischen Datenverarbeitungseinrichtungen, insbesondere in Belegverarbeitungssystemen, in denen Baugruppen magnetische Störfelder im Bereich des Lesekopfes verursachen.

Bekanntlich bilden magnetische Spulen, wie z.B. Elektromagnetspulen und Motorwicklungen magnetische Felder, die in bezug auf Leseköpfe für magnetisch aufgezeichnete Informationen als Störfelder auftreten und die Funktion eines magnetischen Lesekopfes erheblich beeinflussen. Es ist jedoch in elektronischen Datenverarbeitungseinrichtungen, wie z.B. in Belegverarbeitungssystemen, Sortiereinrichtungen, Druckern mit Leseeinrichtungen und dgl., nicht möglich, diese Störfelder zu beseitigen, wenn anstelle eines optischen Lesekopfes ein magnetischer Lesekopf eingesetzt werden soll.

In sog. Belegverarbeitungssystemen werden die sog. MICR-Schriften mit einer Lesegeschwindigkeit von ca. 45 cm/sec gelesen, wobei sich magnetische Störungen besonders unvorteilhaft bemerkbar machen. Eine Maßnahme, die Störfelder bewirkenden Baugruppen abzuschirmen, führt nicht zum gewünschten Erfolg, weil zum einen eine vollständige Abschirmung nicht möglich ist und zum anderen die Abschirmmaßnahmen selbst Nebenwirkungen des größeren Aufwandes und der unerwünschten Wärmeisolation miteinander verbinden. Eine Aufheizung derartiger Geräte ist jedoch nur in einem bestimmten Bereich zulässig. Eine Abschirmung der die magnetischen Störfelder verursachenden Baugruppen ist daher kein ausreichendes Mittel, ein derartiges Problem zu lösen.

Der vorliegenden Erfindung liegt deshalb die Aufgabe zugrunde, angesichts der Unvermeidbarkeit derartiger magnetischer Störfelder weitgehend ohne deren Abschirmung gegenüber einem magnetischen Lesekopf auszukommen und trotzdem ein ausreichend genaues Lesesignal zu erzeugen.

Die gestellte Aufgabe wird bei der eingangs bezeichneten Einrichtung erfindungsgemäß dadurch gelöst, daß ein Lesekopf und ein Referenzkopf mit jeweils gleichen mechanischen und elektrischen Werten in einem Lesesystem zusammengefaßt und in einer Differenzschaltung zusammengeschaltet sind und daß deren Differenzsignal aus dem zweifachen Störsignal und dem Lesesignal am Ausgang der Differenzschaltung einer Lese-Elektronik zuführbar ist. Augrund dieser Lehre wurde festgestellt, daß auch stärkste Störfelder keinen wesentlichen Einfluß mehr auf die Digitalisierung des Lesesignals nehmen können. So konnte durch die vorbezeichneten Maßnahmen ein einwandfreies Lesesignal erreicht werden. Dieser Effekt wurde sowohl beim Lesen von Schriftzeichen nach dem System CMC 7 und dem System E-13B erfolgreich eingesetzt. Labormessungen haben gezeigt, daß sich je nach Güte der nachgeschalteten Differenzschaltung das Störsignal erheblich reduzieren läßt.

Eine vorteilhafte Verwirklichung der Erfindung besteht darin, daß die Störspannung am Referenzkopf und die Mischspannung am Lesekopf jeweils an Eingänge von parallel geschalteten Verstärkern gelegt sind, die als Differenzverstärker geschaltet sind, deren Ausgangssignal an der Lese-Elektronik anliegt.

In Weiterbildung der Erfindung ist vorgesehen, daß ein dem Referenzkopf zugeordneter Teil des Verstärkers derart einstellbar ist, daß ein Abgleich der aufgenommenen Störspannung nach Amplitude and Phase durchführbar ist.

Eine besonders vorteilhafte und in der Praxis günstige Ausführungsform der Erfindung sieht vor, daß der Lesekopf und der Referenzkopf zusammen in einem weitestgehend geschlossenen Metallgehäuse angeordnet sind, wobei lediglich auf der Kopfspiegelseite für den Lesekopf eine Öffnung vorgesehen ist.
ist

Eine andere Verbesserung der Erfindung besteht darin, daß eine auf der Kopfspiegelseite des Referenzkopfes vorgesehene Öffnung im Metallgehäuse durch eine Einlage aus nicht magnetisch leitendem Werkstoff verschlossen ist.

Ein Ausführungsbeispiel der Erfindung ist in der Zeichnung dargestellt und wird im folgenden näher beschreiben. Es zeigen

Fig. 1 ein elektronisches Datenverarbeitungsgerät, hier als Beispiel ein Belegverarbeitungsgerät, in perspektivischer Darstellung mit Angabe der Baugruppen, die magnetische Störfelder im Bereich des Lesekopfes verursachen,

Fig. 2 eine Vorderansicht des Lesesytems,

Fig. 3 eine Seitenansicht des Lesesystems,

Fig. 4 ein Blockschaltbild des Lesesystems mit asymmetrischem Signaleingang,

Fig. 5 eine Differenzschaltung für das Lesesystem mit symmetrischen Signaleingängen und die

Fig. 6A - 6C mehrere Impulsdiagramme, und zwar

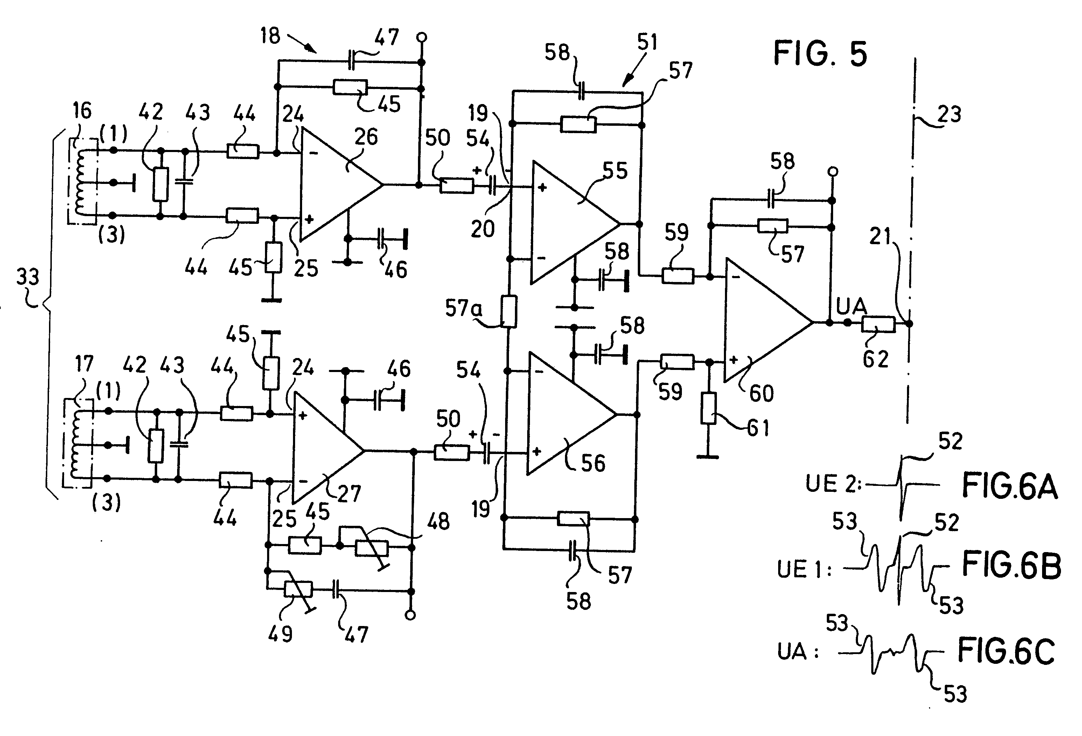

Fig. 6A ein Störsignal,

Fig. 6B ein Nutzsignal mit überlagertem Störsignal und

Fig. 6C das vom Störsignal bereinigte Nutzsignal.

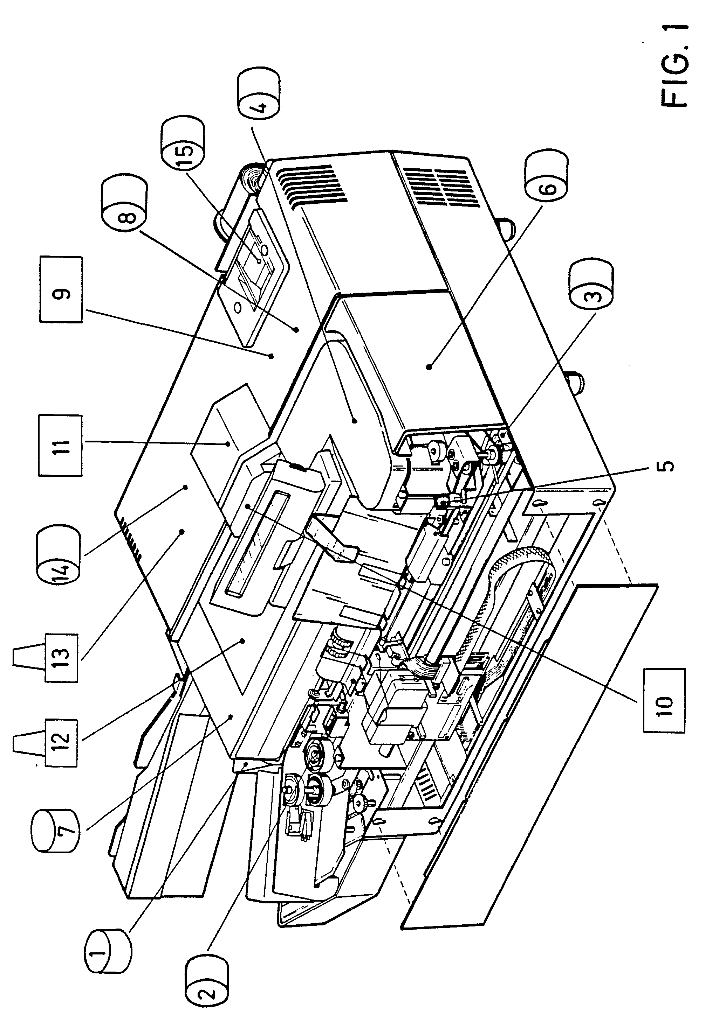

Gemäß Fig. 1 sind am Beispiel eines Belegverarbeitungsgeräts Störfeld-Erzeuger mit den ihnen eigenen Symbolen bezeichnet, die für das Lesen magnetisch aufgezeichneter Informationen unerwünschte magnetische Felder erzeugen. Hierbei treten als Störer für das Lesenutzsignal Komponenten auf, die zeitgleich mit dem Lesekopf arbeiten. Solche Störfelder werden verursacht durch einen Gleichstrommotor 1 für eine Stapelzufuhr, einen Gleichstrommotor 2 für einen Belegtransport, einen Schrittmotor 3 für einen Leseschlitten, einen Gleichstrommotor 4 für das Anheben eines Beleges, eine durch einen Magneten anstellbare Abzugsrolle 5, eine Gleichstrommotor 6 für den Belegtransport, einen Schrittmotor 7 für die Belegbahn, einen Schrittmotor 8 für ein Typenrad, einen Hammermagneten 9 für das Typenrad, einen durch einen Elektromagneten angetriebenen Indossierstempel 10, einen ebenfalls durch einen Elektromagneten betätigbaren Girostempel 11, einen Nadeldruckkopf 12 für ein Indossierdruckwerk, einen Nadeldruckkopf 13 für ein Personalisierungsdruckwerk, einen Gleichstrommotor 14 für eine Zeilenschaltung und ein Journaldruckwerk 15.

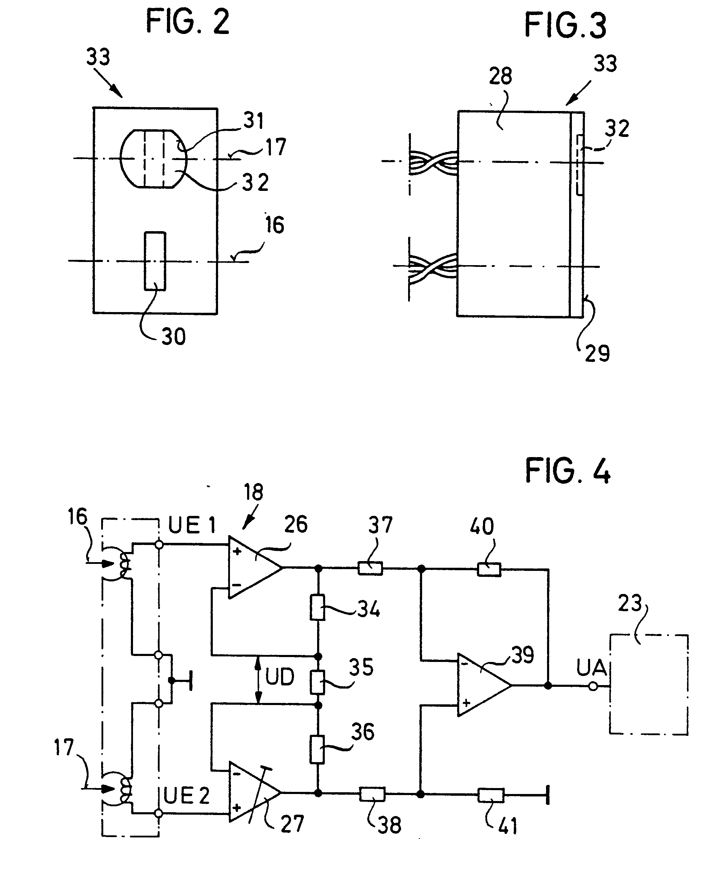

Ein Lesekopf 16 (Fig. 2) kann seiner Art nach grundsätzlich aus einem Magnetsystem mit Wicklungen, aus einem magnetoresistiven Sensor oder z.B. aus einem Hall-Sensor bestehen. Ein solcher Lesekopf 16 und ein Referenzkopf 17 sind in den Fig. 2 und 3 dargestellt, wobei der Lesekopf 16 und der Referenzkopf 17 zusammen in einem weitestgehend geschlossenen Metallgehäuse 28 angeordnet sind und wobei lediglich auf der Kopfspiegelseite 29 für den Lesekopf 16 eine Öffnung 30 vorgesehen ist. Eine auf der Kopfspiegelseite 29 des Referenzkopfes 17 vorgesehen Öffnung 31 im Metallgehäuse 28 ist durch eine Einlage 32 aus nicht magnetisch leitendem Werkstoff verschlossen. Die in den Fig. 2 und 3 dargestellte Baueinheit bildet ein Lesesystem 33.

In dem Blockschaltbild gemäß Fig. 4 wird ein asymmetrischer Signaleingang mit dem Lesekopf 16 und dem Referenzkopf 17 vorausgesetzt. Dementsprechend ist die Störspannung UE2 und die Mischspannung UE1 am Lesekopf 16 jeweils auf die positiven Eingänge der Verstärker 26 und 27 geschaltet, die die Differenzschaltung 18 bilden. Die Differenzspannung UD kann zwischen den Arbeitswiderständen 34 und 35 bzw. zwischen 35 und 36 abgegriffen werden.

Diesen Verstärkern 26 und 27 sind die Anpassungswiderstände 37 und 38 nachgeschaltet. Ein Signalverstärker 39 verstärkt das erhaltene Differenzsignal und der Verstärker 39 ist mit Arbeitswiderständen 40, 41 an die Lese-Elektronik 23 bzw. gegen Masse geschaltet. Vor der Lese-Elektronik 23 ist daher das Ausgangssignal UA vorhanden.

Entsprechend der Erfindungsbeschreibung ist auch hier der Verstärker 27 mit Elementen zum Abgleichen der aufgenommenen Störspannung UE2 nach Amplitude und Phase versehen. Der Verstärker 27 ist daher ein abgleichbarer Verstärker.

Fig. 5 zeigt die Differenzschaltung 18 mit symmetrischen Signaleingängen, wobei der Lesekopf 16 und der Referenzkopf 17 das Lesesystem 33 bilden. Zu den Eingängen (1 und 3) sind jeweils Anpassungswiderstände 42 einschließlich eines Anpassungskondensators 43 geschaltet. Den parallel geschalteten Verstärkern 26 und 27 sind an den spezifischen Eingängen 24 und 25 Eingangswiderstände 44 vorgeschaltet. Außerdem ist dem positiven Eingang jeweils ein Arbeitswiderstand 45 zugeschaltet. Die Verstärker 26,27 sind ferner durch Abblockkondensatoren 46 gegen Störeinflüsse geschützt. An den negativen Eingängen der Verstärker 26 und 27 ist jeweils außer dem Arbeitswiderstand 45 ein Phasenkondensator 47 parallelgeschaltet. Teil des Arbeitswiderstandes 45 am Referenzkopf 17 ist ein Potentiometer 48 für die Amplitude und ein Abgleichwiderstand 49 für die Phase. Im mittleren Teil der Schaltung gemäß Fig. 5 ist der Differenzbildungsschaltung 51 jeweils ein Eingangswiderstand 50 vorgeschaltet. Am positiven Eingang der Differenzbildungsschaltung 51 stehen im Bereich des Verstärkers 55 das Störsignal 19 und das Lesesignal 20 und am positiven Eingang des Verstärkers 56 das Störsignal 19 an. Zwischen diesen Eingängen zur Differenzbildungsschaltung 51 und den Eingangswiderständen 50 ist jeweils ein Koppelkondensator 54 geschaltet. Die Differenzbildungsschaltung 51 besteht im wesentlichen aus den Verstärkern 55 und 56. Die parallel geschalteten Verstärker 55 und 56. sind mittels Arbeitswiderständen 57 und Abblockkondensatoren 58 zusammengeschaltet, wobei ein Differenzwiderstand 57a den eigentlichen Signalunterschied erzeugt. Die Ausgänge der parallel geschalteten Verstärker 55 und 56 sind über Eingangswiderstände 59 einem Signalverstärker 60 vorgeschaltet, der ebenfalls einen Arbeitswiderstand 57 und einen Phasenkondensator 58 aufweist. Außerdem ist dem positiven Eingang des Signalverstärkers 60 ein Arbeitswiderstand 61 zugeschaltet. Am Ausgang 21 liegt die gewünschte Spannung UA an einem Ausgangswiderstand 62 an. Dieses Differenzsignal wird der Lese-Elektronik 23 zugeführt.

Gemäß den Fig. 6A - 6C liegt das Störsignal 52 am Lesekopf 16 (Fußnote 1, UE1, Fig. 6B) und am Referenzkopf 17 (Fußnote 2, UE2, Fig. 6A) an. Die Störspannung UE2 (Fig. 6A) bildet den gezeichneten Impuls, der sich gemäß Fig. 6B zwischen den jeweiligen Nutzsignalen 53 störend bemerkbar macht. Durch die in den Fig. 4 und 5 vorgegebenen Schaltungen wird es nunmehr möglich, das Störsignal 52 bis auf einen vernachlässigbar kleinen Wert derart abzubauen, daß das Ausgangssignal UA (Fig. 6C) praktisch nur noch aus den Nutzsignalen 53 besteht.

**Ansprüche**

1. Einrichtung mit einem Lesekopf (16) für magnetisch aufgezeichnete Informationen in elektronischen Datenverarbeitungseinrichtungen, insbesondere in Belegverarbeitungssystemen, in denen Baugruppen magnetische Störfelder im Bereich des Lesekopfes (16) verursachen, dadurch gekennzeichnet, daß ein Lesekopf (16) und ein Referenzkopf (17) mit jeweils gleichen mechanischen und elektrischen Werten in einem Lesesystem (33) zusammengefaßt und in einer Differenzschaltung (18) zusammengeschaltet sind und daß deren Differenzsignal aus dem zweifachen Störsignal (19) und dem Lesesignal (20) am Ausgang (21) der Differenzschaltung (18) einer Lese-Elektronik (23) zuführbar ist.

2. Einrichtung nach Anspruch 1, dadurch gekennzeichnet, daß die Störspannung (UE2) am Referenzkopf (17) und die Mischspannung (UE1) am Lesekopf (16) jeweils an Eingänge (24,25) von parallelgeschalteten Verstärkern (26,27) gelegt sind, die als Differenzverstärker geschaltet sind, deren Ausgangssignal (UA) an der Lese-Elektronik (23) anliegt.

3. Einrichtung nach den Ansprüchen 1 und 2, dadurch gekennzeichnet, daß ein dem Referenzkopf (17) zugeordneter Teil des Verstärkers (27) derart einstellbar ist, daß ein Abgleich der aufgenommenen Störspannung (UE2) nach Amplitude und Phase durchführbar ist.

4. Einrichtung nach Anspruch 1 oder 2, dadurch gekennzeichnet, daß der Lesekopf (16) und der Referenzkopf (17) zusammen in einem weitestgehend geschlossenen Metallgehäuse (28) angeordnet sind, wobei lediglich auf der Kopfspiegelseite (29) für den Lesekopf (16) eine Öffnung (30) vorgesehen ist.

5. Einrichtung nach einem oder mehreren der Ansprüche 1 bis 3, dadurch gekennzeichnet, daß eine auf der Kopfspiegelseite (29) des Referenzkopfes (17) vorgesehen Öffnung (31) im Metallgehäuse (28) durch eine Enlage (32) aus nicht magnetisch leitendem Werkstoff verschlossen ist.

FIG. 1

# FIG. 2

33

31
17
32

16

30

# FIG. 3

28

33

32

29

# FIG. 4

16

UE 1

18

26

37

40

34

UD

35

36

39

23

UA

27

38

41

17

UE 2

FIG. 5

FIG.6A
FIG.6B
FIG.6C

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | PATENT ABSTRACTS OF JAPAN, Band 10, Nr. 26 (P-425)[2083], 31 Januar 1986, & JP - A - 60 177 408 (TOKYO DENKI K.K.) 11.09.1985 * vollständiges Dokument * --- | 1,3 | G 11 B  5/11 |
| A | DE-A-2 945 491  (R. BOSCH GMBH) * Patentansprüche 1,2 * --- | 1 | |
| A | DE-U-8 007 387  (GRUNDIG E.M.V.) * Seite 4, Zeilen 3-7; Figur 1 * ----- | 4 | |
| | | | **RECHERCHIERTE SACHGEBIETE (Int. Cl.4)** |
| | | | G 11 B  5/00 |

Der vorliegende Recherchenbericht wurde für alle Patentansprüche erstellt

| Recherchenort | Abschlußdatum der Recherche | Prüfer |
|---|---|---|
| BERLIN | 16-06-1988 | GERARD E.A.S. |

EPO FORM 1503 03.82 (P0403)